# EUROPEAN PATENT APPLICATION

(11) **EP 1 615 186 A2**
(43) Date of publication of application: **11.01.2006**
(21) Application number: 05014785.9
(22) Date of filing: 07.07.2005
(51) Int. Cl.: G08B 13/196

(54) **Image protection apparatus, imaging apparatus, and program**

(30) Priority: 07.07.2004 JP 2004199944
(71) Applicant: SONY CORPORATION, Tokyo 141 (JP)
(72) Inventor: Hagita, Shoji, Shinagawa-ku Tokyo (JP)
(74) Representative: Melzer, Wolfgang

(57) **Abstract**

An image protection apparatus includes (a) a set-state determining unit (3) that determines a set state regarding a protection function for an image, and (b) a protection process unit (5) that, when the protection function is determined by the set-state determining unit to be in a valid state, selectively performs lossless coding of a specified image region of an input image, thereby to perform a conversion to a state making it difficult to verify an image in a portion corresponding to the specified image region. Thereby, the conversion can be performed to the state making it difficult the image verification by a third person. In addition, when posterior verification of an image is necessary, the image can be played back to an original image.

## Description

### CROSS REFERENCES TO RELATED APPLICATIONS

The present invention contains subject matter related to Japanese Patent Application JP 2004-199944 filed in the Japanese Patent Office on July 7, 2004, the entire contents of which being incorporated herein by reference.

### BACKGROUND OF THE INVENTION

### 1. Field of the Invention

The present invention relates to an image protection apparatus that realizes a function of selectively protecting a specified image region of an input image.

The invention further relates to an image protection apparatus that realizes a function of canceling a protection process applied to an image.

The input image herein refers to any one of various images, such as captured images and played-back images. The invention is also realized in the form of an imaging apparatus including the image protection apparatus. The invention is further realized in the form of a program.

### 2. Description of the Related Art

Nowadays there are demands for the installation of surveillance cameras the purpose of maintaining criminal prevention, criminal evidences, and the like. For example, the demands include setting of surveillance cameras in buildings, facility points of interest, and sites. Subjects are not limited to humans, animals, and other living creatures, but the subjects include real estates, natural things, and others.

In a past apparatus, a protection-desired image range is replaced with a mask image to achieve privacy protection. The mask image uses patterns including, for example, a black pattern, gray pattern, white pattern, and colored pattern.

However, in such a past apparatus, even when a verification is desired to be made for a region replaced with a mask image in conjunction with an incident, accident, or the like, an original image does not already exist. As such, playback of important information cannot be achieved.

Under these circumstances, techniques have been proposed in which masking is not performed on the output side, selective masking is performed on the receiving side (see Japanese Unexamined Patent Application Publication No. 2004-80669, for example).

### SUMMARY OF THE INVENTION

However, according to the techniques, it is prerequisite that a receiving system corresponds to a selective masking function. As such, in the event that the receiving system does not correspond to the selective masking function, a case can occur where the privacy protection cannot be implemented.

In addition, even when the receiving system corresponds to the selective masking function, the privacy protection cannot be achieved unless a third person selects the execution of the selective masking function.

In view of the above-described technical problems, the present inventor proposes techniques summarized herebelow.

According to one technique proposed, an image protection apparatus includes (a) a set-state determining unit that determines a set state regarding a protection function for an image and (b) a protection process unit that, when the protection function is determined by the set-state determining unit to be in a valid state, selectively performs lossless coding of a specified image region of an input image, thereby to perform a conversion to a state making it difficult to verify an image in a portion corresponding to the specified image region.

Preferably, the image protection apparatus includes plural types of lossless coding methods, and is able to perform the lossless coding of the specified image region in accordance with any one of or a combination of the plural types of lossless coding methods.

In addition, it is preferable that the image protection apparatus moves the image region undergoing the lossless coding in accordance with the movement information in an imaging direction. Thereby, the protection for a subject set as a protection target can be continued, regardless of the movement in the imaging direction.

Further, it is preferable that the image region undergoing the lossless coding is moved in accordance with the movement of the subject set as the protection target. Thereby, the protection for the subject set as the protection target on a screen can be continued.

According to another technique proposed, an image protection apparatus includes (a) a set-state determining unit that determines a set state regarding a protection function for an image, and (b) a protection canceling unit that, when the protection function is determined by the set-state determining unit to have been cancelled, performs decoding of an image region of an input image, which image region has undergone lossless coding to be a state making it difficult to be verified, to an original state in accordance with a decoding method corresponding to a lossless coding method.

Preferably, the protection canceling unit corresponds to plural types of lossless coding methods, and is able to perform playback of an image in a corresponding portion to an original state in accordance with information of a lossless coding method which information has been acquired from the input image.

With the techniques being employed, the image region specified as the protection target is coded and converted to the state making it difficult to perform the image verification. Consequently, the image can be maintained to the state making it difficult for a third person to perform the image verification.

In the case of the technique according to the invention, the lossless coding method is used to code the specified image region. As such, only a person knowing a decoding method corresponding to a coding method used in the coding event is able to perform playback to the original image.

Unless the coding method and the decoding method do not correspond to each other, the image region specified as the protection target cannot be verified. Consequently, security of the image specified as the protection target can be enhanced.

More specifically, it is to be understood that the invention has been shown and described merely in term of exemplary embodiments, so that the contents of description of the present Specification is not to be restrictively interpreted, but the appended claims should be referenced to determine the essence of the invention.

### BRIEF DESCRIPTION OF THE DRAWINGS

In the accompanying drawings:
FIG. 1 is a view showing an example of image protection apparatus;
FIG. 2 is a view showing the relationship between a protection region and protection region data;
FIG. 3 is a view showing an example of a coordination input unit;
FIG. 4 is a view showing display examples before and after application of a protection process;
FIGS. 5A to 5D are views individually showing display examples of images before and after cancellation of the protection process;
FIG. 6 is a view showing an example of an image protection apparatus including plural types of protection process functions;
FIG. 7 is a view showing an example of an image protection apparatus including an image-signal input switch function;
FIG. 8 is a view showing example of an image protection apparatus including an auto-setting function in respect of a change of an imaging direction;
FIG. 9 is a view showing an example auto-following operation of a protection region in respect of a change of the imaging direction;
FIG. 10 is a view showing an example of an image protection apparatus including an auto-setting function of a protection region;
FIGS. 11A and 11B are views showing an example auto-setting operation of protection regions; and
FIG. 12 is a view showing an example application to a security camera.

### DETAILED DESCRIPTION OF THE PREFERRED EMBODIMENTS

Embodiments employing the techniques according to the invention will be described herebelow.

For portions specifically neither shown nor described, well-known techniques in the related technical field are adapted.

Embodiments described herebelow are just examples, and the invention is not limited thereto.

### (A) First Embodiment

### (a) Apparatus Configuration

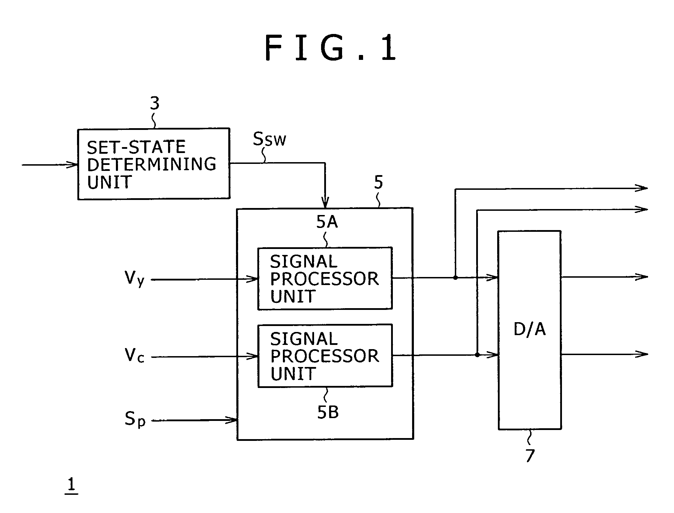

FIG. 1 shows an example configuration of an image protection apparatus. The image protection apparatus, 1, has constitutional elements including a set-state determining unit 3, a privacy protection unit 5, and a digital/analog converter unit 7 ("D/A converter unit 7", hereafter).

The set-state determining unit 3 is a processing device that determines through, for example, operation, setting, and/or the like using a user interface whether or not image protection is requested. As the user interface, buttons, switches, or a GUI (graphical user interface), for example, is used. In addition, as storage of setting information, a semiconductor memory device, hard disk, or other medium is used.

Two determination functions are mounted in the set-state determining unit 3. One is the function of determining the set state regarding whether or not protection is to be applied on an input image. The other is the function of determining the set state regarding whether or not protection is cancelled from an input image.

The set-state determining unit 3 outputs the determination result in the form of a protection function signal Ssw. In the event of ordering an execution or cancellation of the protection process to the privacy protection unit 5, the set-state determining unit 3 controls a protection function signal Ssw to an ON state. On the other hand, when causing the input image to remain unchanged, the set-state determining unit 3 controls the protection function signal Ssw to an OFF state.

The privacy protection unit 5 is a processing device that processes a specified image region of the input image as a process target. The privacy protection unit 5 functions as a protection process unit when applying the protection on the input image, but functions as a protection canceling unit when canceling the protection applied on the input image.

A processing-target image region ("protection region," hereafter) is supplied by protection region data Sp. The protection region data Sp is supplied through, for example, an external device and a storage device that stores set information.

The privacy protection unit 5 includes signal processor units 5A and 5B provided, respectively, for a luminance signal Vy and a color signal Vc.

The signal processor unit 5A, 5B is a device that selectively applies a predetermined protection process on a protection region. The signal processor unit 5A and 5B does not apply the process on other luminance signals Vy and color signal Vc than those corresponding to a protection region.

Execution or termination of predetermined protection process is controlled by the protection function signal Ssw supplied from the set-state determining unit 3. The protection process is executed either upon a request for image protection or upon a request for protection cancellation.

The protection process being executed by the signal processor unit 5A, 5B is either a lossless coding process or decoding process for decoding the result of the lossless coding process.

As an example case, the protection includes and uses replacing processing for replacing an input signal with a complement of 2 (which corresponds to positive/negative conversion processing), replacing processing for the luminance signal Vy and color signal Vc, and replacing processing for replacing a bit position, and other lossless coding processing. In addition, the protection process includes combined processing of the aforementioned processing.

The bit-position replacing processing includes replacing processing that replaces, for example, a certain number of high bits and a certain number of low bits, and replacing processing that replaces bit data in accordance with a predetermined shuffling pattern.

According to the protection process, an image corresponding to a protection region is converted to a difficult-to-verify state (inclusive of a difficult-to-identify degree).

In the present embodiment, the lossless coding process to be applied is replacement of signals between the luminance signal Vy and the color signal Vc. For this reason, a two-way arrow is shown between the signal processor unit 5A and the signal processor unit 5B.

The lossless coding process employed by the signal processor unit 5A, 5B is predetermined, and a corresponding processing device is pre-stored.

The D/A converter unit 7 is a device that converts an individual image signal in a digital signal format, which has been output from the privacy protection unit 5, to an analog signal. Nevertheless, however, when outputting a protection-process applied image signal as it is, the D/A converter unit 7 need not be mounted. In the configuration shown in FIG. 1, two types of signal formats are addressable.

Although not shown, synchronous pulses are supplied to the privacy protection unit 5 and the D/A converter unit 7.

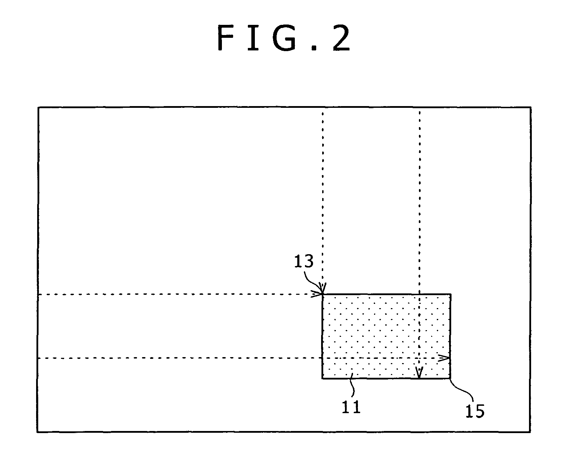

FIG. 2 exemplifies two points being supplied with the protection region data Sp that render a protection region. FIG. 2 corresponds to an example screen displaying on, a monitor, output signals of the image protection apparatus 1.

Protection region data Sp are supplied on a start point 13 of a protection region 11 and an end point 15 as a diagonal coordinate thereto.

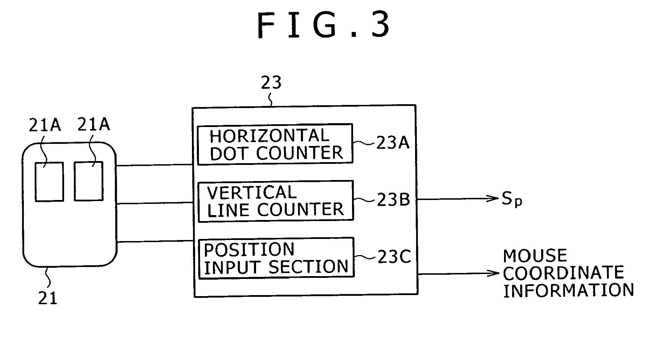

A protection region is specified by using, for example, a coordinate input device shown in FIG. 3. Pointer position information having been input through a mouse 21 is detected by a position detector unit 23. The Pointer position information detected by the position detector unit 23 is displayed on a monitor screen.

The position detector unit 23 is configured of a horizontal dot counter 23A, a vertical line counter 23B, and a position input section 23C.

The horizontal dot counter 23A detects the mouse movement to the x direction in accordance with the number of pulses. The vertical line counter 23B detects the mouse movement to the y direction in accordance with the number of pulses. The position input section 23C is a device that detects a click(s) on a switch 21A.

The protection region 11 is specified in the following manner. To begin with, an operator through the mouse moves the pointer on the screen to a position being used as the start point 13, and then clicks the switch 21A. A click on the switch 21A is detected by the position input section 23C. The position input section 23C specifies the x coordinate and the y coordinate at the time point through the two counters.

Subsequently, the operator moves the pointer along a diagonal direction with the mouse 21 being clicked, thereby to stop the clicked state at a position being used as the end point. The position whereat the clicking of the switch 21A is stopped is detected by the position input section 23C. The position input section 23C in turn specifies the x and y coordinates at that time point through the two counters.

The protection region is thus specified through the operations described above. The specification manner may be such that the end point is first specified, and then the start point is specified. When a lower left corner position and an upper right corner position are input, coordinate values of the start and end points may preferably be calculated in accordance with coordinate values of the positions.

### (b) Processing Operation

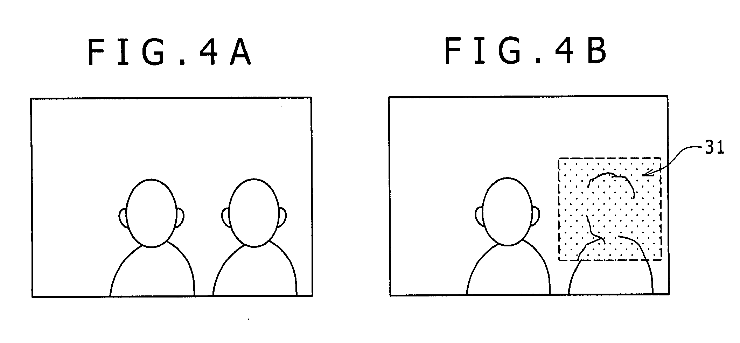

FIG. 4 is a conceptual view of the protection process using the image protection apparatus.

First, the following describes a case where image signals from an imaging camera are input into the image protection apparatus 1. In this case, a protection region is assumed to have already been set.

FIG. 4A is an example screen in a case where the protection process is not applied. In this case, the protection function signal Ssw is in the ON state.

The protection function signal Ssw is supplied through the set-state determining unit 3 to the privacy protection unit 5, thereby to regulate the processing operation of the privacy protection unit 5. More specifically, the privacy protection unit 5 outputs a luminance signal Vy and color signal Vc input from the imaging camera as they have been input.

FIG. 4B is an example screen in a case where the protection process is applied. In this case, the protection function signal Ssw is in the OFF state.

The protection function signal Ssw is supplied through the set-state determining unit 3 to the privacy protection unit 5, thereby to regulate the processing operation of the privacy protection unit 5. In this case, upon receipt of an input image signal specified in the protection region data Sp and corresponding to the protection region 31, the privacy protection unit 5 replaces the luminance signal Vy and color signal Vc and then outputs replaced signals.

In this event, the information of the original image is simply replaced in position, but is not erased. However, as shown in FIG. 4B, with the replaced luminance signal Vy and color signal Vc, the detail of the image within the protection region is cannot be verified.

Image portions other than the protection region are output as they are.

The following describes a case where an image signal to which the protection process has been applied is input to the image protection apparatus 1.

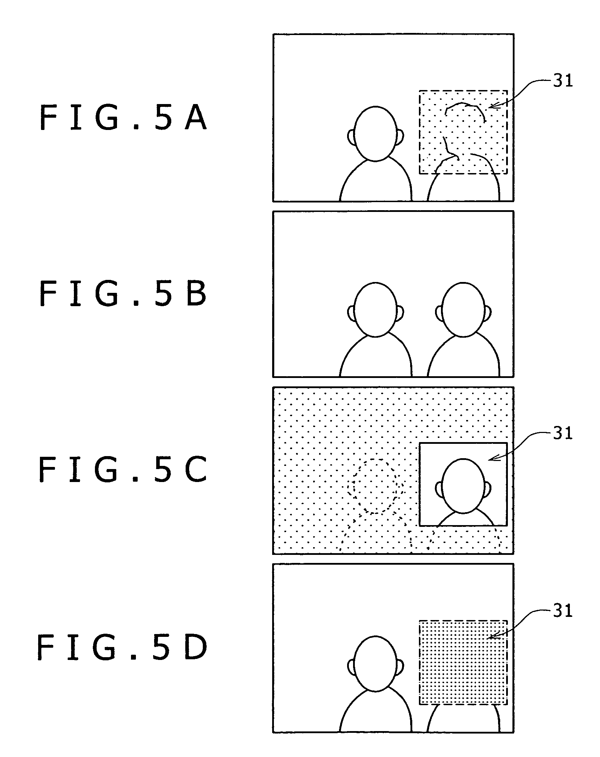

FIG. 5A is an example screen in a case where the protection process is not cancelled. In this case, the protection function signal Ssw is in the OFF state.

The protection function signal Ssw is supplied through the set-state determining unit 3 to the privacy protection unit 5, thereby to regulate the processing operation of the privacy protection unit 5. The privacy protection unit 5 outputs a luminance signal Vy and color signal Vc input from the imaging camera as they have been input.

FIG. 5B is an example screen in a case where the protection process is cancelled. In this case, the protection function signal Ssw is in the ON state.

The protection function signal Ssw is supplied through the set-state determining unit 3 to the privacy protection unit 5, thereby to regulate the processing operation of the privacy protection unit 5. That is, upon receipt of an input image signal specified in the protection region data Sp and corresponding to the protection region 31, the privacy protection unit 5 replaces the luminance signal Vy and color signal Vc and then outputs replaced signals.

Consequently, the original luminance signal Vy and color signal Vc are played back, so that the image in protection region 31 can be verified.

In the event of the cancellation of the protection process, when the protection region data Sp is not supplied, the privacy protection unit 5 assumes the overall image as a processing target and replaces the luminance signal Vy and color signal Vc to thereby output the replaced signals. Consequently, as shown in FIG. 5C, only the image in the protection region 31 can be verified, and other image regions are converted to a difficult-to-verify state.

Inasmuch as the lossless coding method for the cancellation of the protection process is different from the lossless coding method provided in the image protection apparatus and used to apply the protection process, the image in the protection region 31 cannot be played back to a normal image, as shown in FIG. 5D.

In addition, in an image processing apparatus not including the cancellation function of the protection process, cancellation processing of the protection process does not exist per se. As such, even when a protection-process applied image signal erroneously flows out, there occurs no case where the image contents are verified.

### (c) Effects/Advantages

As described above, since the lossless coding method is used to protect the protection region, even when an event of being desirous to make posterior verification has occurred with respect to a protection region, the necessary image can be completely played back by application of appropriate decoding processing.

In addition, according to the present protection process, modification is applied to the protection region. Consequently, even when the image has erroneously leaked to a third person, there is no risk that the image contents are verified by the third person.

Further, unless otherwise the coding method used in the application of the protection process is known to a third person, the image contents cannot be freely verified by the third person. Thereby, the privacy protection function can be enhanced.

### (B) Second Embodiment

### (a) Apparatus Configuration

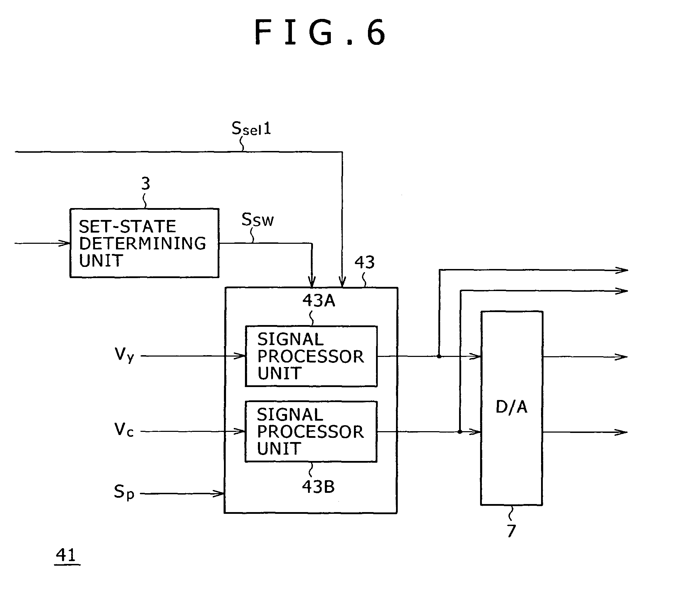

FIG. 6 shows another example configuration of an image protection apparatus. In FIG. 6, the same characters denote portions common to those of FIG. 1.

The image protection apparatus, 41, has constitutional elements including the set-state determining unit 3, a privacy protection unit 43, and the D/A converter unit 7. The configuration except for the privacy protection unit 43 is the same as that of FIG. 1. The privacy protection unit 43 will be explained below.

The privacy protection unit 43 is different from the privacy protection unit 5 in that while addressing plural types of protection processings, the privacy protection unit 43 executes the protection process by selectively using one of the protection processings. The privacy protection unit 43 addresses the positive/negative conversion processing, replacing processing for the luminance signal Vy and color signal Vc, bit-position replacing processing, combined processing thereof.

In the privacy protection unit 43, there are pre-stored a plurality of processing devices corresponding to the aforementioned plural types of lossless coding processings (methods). The processing devices are provided corresponding to signal processor sections 43A and 43B corresponding to the luminance signal Vy and the color signal Vc.

The privacy protection unit 43 includes a switching function that selectively switches among processings by the plurality of processing devices in accordance with a method selection signal Ssel1.

The method selection signal Ssel1 is supplied through, for example, an external device or a storage device storing setting information.

As a lossless coding method for the protection process may be a single method arbitrarily selected from those described above. The method may be selected either through a user interface or a random number generator prepared in the image protection apparatus 41.

The protection process may either fixedly use a selected coding method or repeatedly performing switching a number of times.

Methods of specifying switching timing include, for example, a method of switching the processing with arbitrary timing (including a case where the timing is specified through a user interface) and a method of periodically or cyclically performing switching.

Likewise, selection methods for a coding method to be used include, for example, a method of selection to be carried out through a user interface, a method of performing random switching, and a method of performing switching in a predetermined order.

When randomly switch among the coding methods, the method selection signal Ssel1 is supplied through a random number generated by the random number generator. Random numbers being used include pseudo-random numbers.

The privacy protection unit 43 further has a function of storing into a management information memory histories of coding methods selected by switching in accordance with the above-described methods. The histories are thus stored as management information (metadata) of processed image signals. Accordingly, in the event of decoding, lookup access to the management information enables canceling the image protection applied in accordance with the same coding method as that used in the event of the coding.

The management information may be read by necessity, and read-out information may be used by an other image protection apparatus to perform decoding processing. Employing this procedure further enhances image security.

### (b) Effects/Advantages

As described above, since the plural types of lossless coding methods to be used for the image protection process are prepared, image decoding can be made to be difficult. Thereby, the privacy protection function can be enhanced.

### (C) Third Embodiment

### (a) Apparatus Configuration

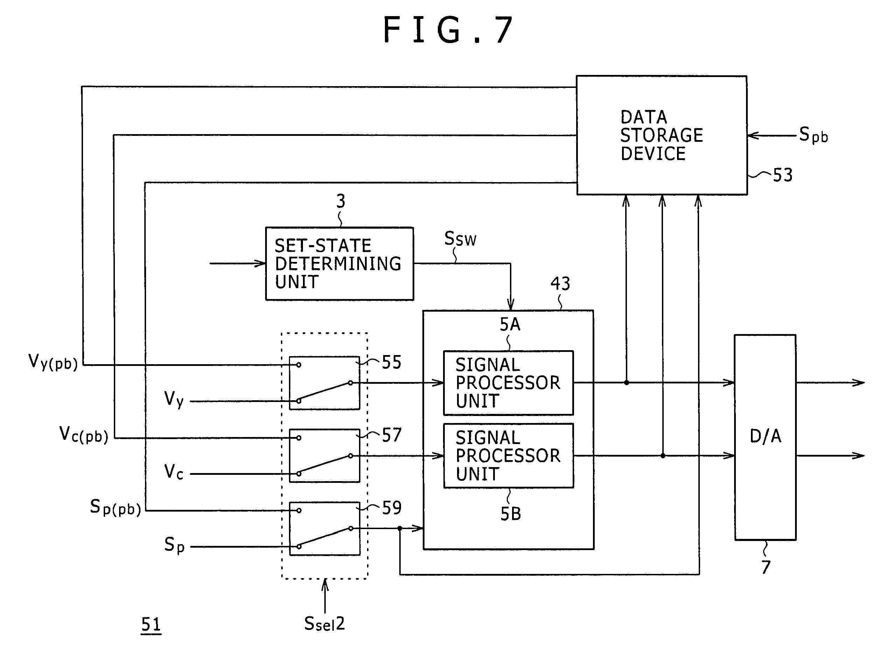

FIG. 7 shows another example configuration of an image protection apparatus. In FIG. 7, the same characters denote portions common to those of FIG. 1.

The image protection apparatus, 51, is configured having a set-state determining unit 3, a privacy protection unit 5, a D/A converter unit 7, a data storage device 53, and input-selection switches 55, 57, and 59. The configuration except for the input-selection switches 55, 57, and 59 is the same as that of FIG. 1. The data storage device 53 and the input-selection switches 55, 57, and 59 will be described herebelow.

The data storage device 53 stores into a storage medium image signals output from the privacy protection unit 5.

More specifically, the data storage device 53 stores image signals with which the protection process is applied on an image region, and image signals with which either the protection process is not applied on a protection region or the protection process has been cancelled.

Storage of an image signal is executed in synchronism with a synchronous pulse. Also the protection region data Sp is stored together with the image signal. At the same time, also management information, such as recording date and time for retrieval in the decoding event is stored.

For the storage medium, any one of the following various media types is used: magnetic storage media such as a magnetic tape and magnetic disk of the type optically reading information; and a semiconductor memory.

The storage medium may be of the type provided attachably and detachably with respect to an apparatus body of the image protection apparatus 51. Alternatively, the storage medium may be of the type mounted in an external storage device externally connected to the image protection apparatus 51.

The input-selection switch 55 is an input-switching switch for luminance signals Vy. In the present case, the switch is used to switch between a luminance signal Vy of a primary signal system and a luminance signal Vy(PB) of a playback system.

The input-selection switch 57 is an input-switching switch for color signals Vc. In the present case, the switch is used to switch between a color signal Vc of the primary signal system and a color signal Vc(PB) of the playback system.

The input-selection switch 59 is an input-switching switch for protection region data Sp. In the present case, the switch is used to switch between protection region data Sp, which is based on an external input or setting inside of the apparatus, and protection region data Sp(PB), which has been played back together with the image signal.

Switching over the input-selection switch 55, 57, 59 is implemented in accordance with an input-switching signal Ssel2 that switches for the inputs between the primary signal system and the playback system.

### (b) Processing Operation

A processing operation of the present embodiment will be described herebelow.

First, the following describes a case where the input-switching signal Ssel2 indicates the primary signal system.

In this case, the operation is exactly the same as that in the first embodiment. That is, in response to the protection function signal Ssw, the protection process (including the cancellation process) is selectively executed on the luminance signal Vy and color signal Vc being input from the primary signal system.

When the protection process is applied on the protection region, the protection region data Sp is stored together with the image signal into the data storage device 53. However, when, for example, the protection process is not applied on the protection region or the protection process has been cancelled, only the image signal is stored into the data storage device 53.

Next, a case where the input-switching signal Ssel2 indicates the playback system will be described herebelow.

In this case, the playback luminance signal Vy(PB), playback color signal Vc(PB), and protection region data Sp(PB) for playback of a position specified with a playback address are read from the data storage device 53, and are input to the privacy protection unit 5 through the input-selection switches 55, 57, and 59.

The contents of the protection process with respect to the playback luminance signal Vy(PB) and the playback color signal Vc(PB) are the same as those in the first embodiment. For example, addition of the protection process and cancellation of the protection process can be implemented. Of course, input image signals can be output as they are in the input states.

### (C) Effects/Advantages

As described above, in the configuration the processing-target image signal can be freely selected between the primary signal system and the playback system. The configuration makes it possible to enhance the work efficiency of the protection process on images. Particularly, the configuration is preferable when frequently adjusting the protection region position. For example, the configuration is preferably used with an image protection apparatus having a protection region editing function.

### (D) Fourth Embodiment

### (a) Apparatus Configuration

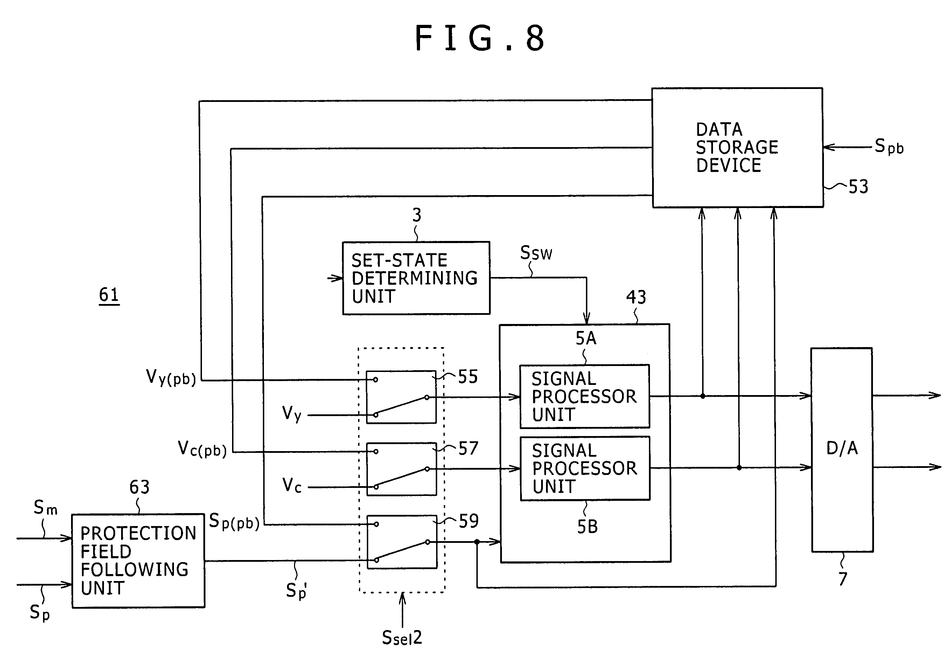

FIG. 8 shows another configuration of an image protection apparatus. In FIG. 8, the same characters denote portions common to those of FIG. 7.

The image protection apparatus, 61, is characterized in that an auto-following function is added to the configuration of the third embodiment. The following describes a protection region following unit 63 having a configuration specific to the present embodiment.

The protection region following unit 63 is a processing device for causing a positional shift of a protection region in such a manner as to follow a change in the imaging direction (that is, pan/tilt movement).

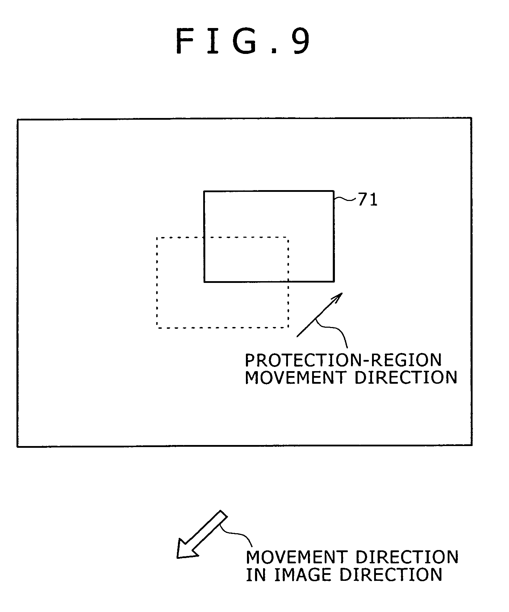

FIG. 9 shows an example auto-following operation according to the above. In FIG. 9, the movement in the imaging direction during an imaging operation is shown by a bold arrow. In addition, a pre-movement position of a protection region 71 is shown by a broken line, and post-movement position of the protection region 71 shown by a solid line. The movement of the protection region 71 is shown by a thin arrow.

As can be known from the comparison between the two arrows shown in the drawing, the protection region following unit 63 moves the protection region 71 to a different position along a direction apposite the direction of the movement in the imaging direction. This is because the protection target relatively moves in association with the movement thereof in the imaging direction from the center of the image to a corner of the screen.

The protection region following unit 63 inputs protection region data Sp and change information Sm and generates protection region data Sp' having data changed in the position of the protection region. The change information Sm is information that supplies the movement direction and the amount of movement in the imaging direction in a unit time during the imaging event. The post-change protection region data Sp' is supplied to one input terminal of the input-selection switch 59.

### (b) Effects/Advantages

As described above, the protection-region auto-following function is mounted in the configuration. Thereby, even when the imaging direction is changed after setting of a protection region, the protection region can be moved to a different position in such a manner as to follow the changed direction. Consequently, work necessary to reset the protection region can be avoided.

### (E) Fifth Embodiment

### (a) Apparatus Configuration

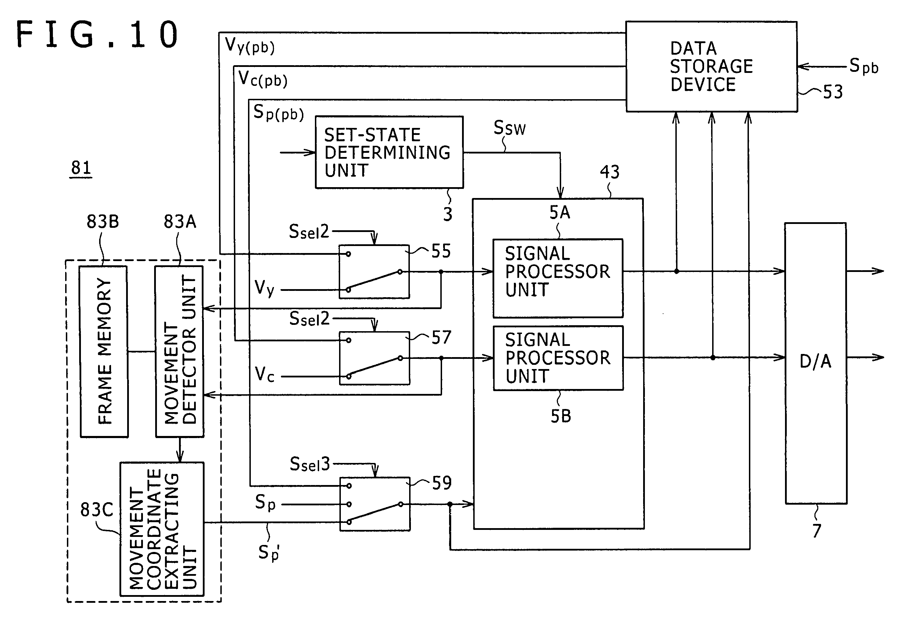

FIG. 10 shows another example configuration of an image protection apparatus. Also FIG. 10 shows portions common to those of FIG. 7 by assigning the same reference characters.

The image protection apparatus, 81, is characterized in that a protection-region auto-setting function is added to the configuration according to the third embodiment.
The following describes a protection region setting unit 83 specific to the present embodiment.

The protection region setting unit 83 is a processing device that implements the function of automatically setting a moving region to a protection region. The protection region setting unit 83 has constitutional elements including a movement detector unit 83A, a frame memory 83B, and a movement coordinate extracting unit 83C.

The luminance signal Vy (Vy(PB)) and color signal Vc (Vc(PB)) respectively selected by the switches 55 and 57 are input to the protection region setting unit 83. The movement detector unit 83A performs a comparison of these signals to signals corresponding to a certain number of frames stored in the frame memory 83B, thereby to detect a moving region portion. The detection result is supplied to the movement coordinate extracting unit 83C.

A range to be detected as a region portion with can be freely set in accordance with a determination reference. For example, if a threshold of the movement vector is increased, only a region portion in a relatively large movement can be detected.

The movement coordinate extracting unit 83C obtains coordinates of a detected region portion, and generates data of the coordinates in the form of a protection region data Sp". The protection region data Sp", which has thus been generated by the movement coordinate extracting unit 83C, is input to one input terminal of the input-selection switch 59.

Switching between input terminals over the input-selection switch 59 is implemented by an input switch signal Ssel3 that drives input switching among three systems, namely, the primary signal system, the playback system, and an auto-setting system.

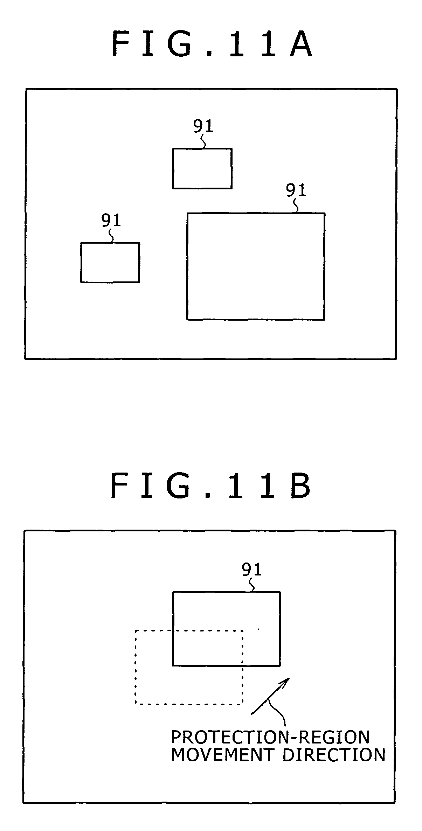

FIGS. 11A and 11B shows example setting of protection regions in the case that the protection region setting unit 83 is used. Specifically, FIG. 11A shows a state where a plurality of region portions in movement are individually set to protection regions 91. FIG. 11(B) shows a state where a protection region 91 is flowingly moving in association with movement of a subject.

### (b) Effects/Advantages

As described above, the function capable of automatically setting a region portion to a protection region with movement is mounted in the configuration. This configuration enables reducing work burden when protecting a subject with movement. Further, a protection region can be moved corresponding to the movement of a subject.

### (F) Example Systems

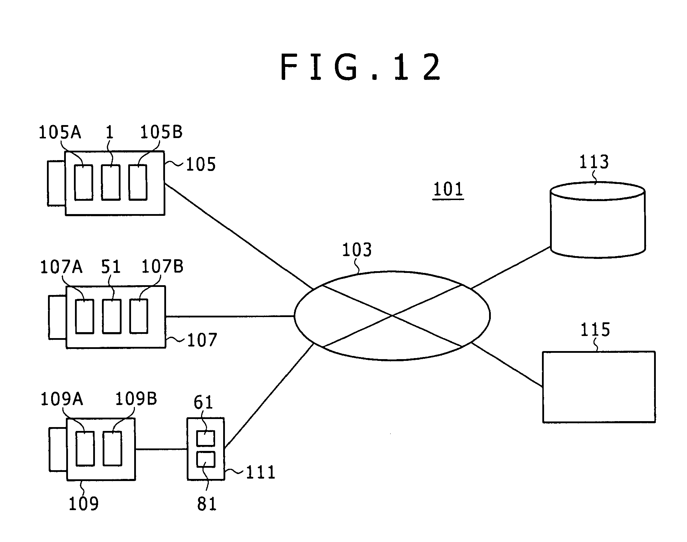

FIG. 12 shows an example application of the image protection apparatus described above. More specifically, FIG. 12 shows an example application of the image protection apparatus in a security camera system 101.

The security camera system 101 has a configuration wherein a captured-image transmission system (imaging cameras 105, 107, and 109, and an image processing apparatus 111) and a captured-image receive system are connected to a network 103.

The imaging camera 105 has an apparatus configuration wherein a front-end signal processor unit 105A, the image protection apparatus 1, and a transmitting unit 105B are stored in a housing. An image signal imaged by the imaging camera 105 undergoes the protection process, and is transmitted to the network 103.

The imaging camera 107 has an apparatus configuration wherein a front-end signal processor unit 107A, the image protection apparatus 51, and a transmitting unit 107B are stored in a housing. Similar to the above, an image signal imaged by the imaging camera 107 undergoes the protection process, and is transmitted to the network 103.

The imaging camera 109 has an apparatus configuration wherein a front-end signal processor unit 109A and a transmitting unit 109B are stored in a housing. The imaging camera 109 does not include the image protection apparatus, but include the image processing apparatus 111 connected at the backstage thereof, and the image protection apparatuses 61 and 81 are mounted in the image processing apparatus 111. Accordingly, the image signals having undergone the protection process are transmitted to the network 103.

Some of the image signals are stored in a storage device 113 connected through the network 103, and some of the image signals are transmitted to a monitor 115 for display thereon.

According to the system configuration thus formed, even when an image with a high privacy level is transmitted through a network, privacy, confidentiality, and the like can be protected.

### (F) Other Embodiments

(a) In the above-described embodiments, the luminance signal Vy and the color signal Vc are input as image signals. However, when RGB signals are to be input, the embodiment configuration can be adapted to a case where a luminance signal and a color difference signal are input. In this case, for example, in the lossless coding process, an R (red) signal, G (green signal), and B (blue) signal may be replaced with one another, or color difference signals may be replaced with one another.
   After conversion to the signal format described above, processings similar to those described in the embodiments may be applied. Of course, the luminance signal Vy and color signal Vc may be converted to the RGB signal format or may be converted to the luminance signal and color difference signal formats.
(b) In the embodiments, whereas description has been made by reference to the case where the processing devices corresponding to the protection processings are pre-stored as hardware in the privacy protection unit 5, the corresponding protection processings may be realized in the form of software. In this case, a processing module to be used for the protection processings is executed in the computer.
(c) In the above-described embodiments, the protection region data Sp is used to specify the protection region, but may be used to specify a non-protection region. In this case, a region other than the region specified by the protection region data Sp is set as a protection region.
(d) In the above-described embodiment, whereas description has been made by reference to the case where the image protection apparatus is applied to the security camera system, the apparatus can be applied to any of the fields of broadcast systems and communication systems.
(e) In the above-described embodiment, whereas description has been made by reference to the case where the image protection apparatus is mounted only in the transmission system, but can be mounted in the receive system.
(f) In the above-described embodiments, whereas description has been made by reference to the case where the information of the lossless coding method used in the protection process is retained in the image protection apparatus, the information may be outputtable together with the image signal. With this configuration being employed, the cancellation of the protection process can be implemented by the image protection apparatus in a state different from the state in the coding event. In order to prevent unrestricted cancellation of the protection process, it is preferable to apply a certain authentication requirement as a condition.
(g) In the above-described embodiment, the region portion in movement detected by the movement detector unit 83A is set to the protection region, the protection region may be moved to a different position in accordance with the movement vector detected by the movement detector unit 83A. With this technique being employed, the protection region can be moved in such a manner as to follow the movement of the protection target.
(h) In the embodiments, whereas description has been made by reference to the case where the protection apparatus is mounted in the imaging camera, the protection apparatus can be mounted to any apparatus as long as the apparatus is an image processing apparatus.
   For example, the image protection apparatus can be mounted in any of computers, printers, video cameras, digital cameras, game machines, scanners, mobile or portable information terminals (such as mobile computers, cellular phones, mobile game machines, and electronic publications), timepieces, image playback apparatuses (such as optical disk apparatuses and home servers), monitors, TV receivers, and processing boards and processing cards including the functions according to the present invention.
   Any of the image processing apparatuses has a housing, signal processor units, and an external interface as common configuration members, and is configured such that peripheral devices corresponding to commercial product formats are assembled. For example, in the case of a device such as a video camera or digital camera, the device includes, for example, color units and a write circuit that causes imaged video image data imaged to be stored in a storage medium, in addition to the configuration described above.
   In addition, for example, in the case of an electronic device having a cellular phone and/or other communication functions, the device includes, for example, transmit/receive circuit and an antenna.
(i) For the above-described embodiments, various modified embodiments can be considered within the scope of the invention. Further, various modified embodiments and example applications created in accordance with the description of the present Specification can be considered.

## Claims

1. An image protection apparatus, comprising:
a set-state determining unit (3) adapted to determine a set state regarding a protection function for an image; and
a protection process unit (5) that is adapted, when the protection function is determined by the set-state determining unit (3) to be in a valid state, to selectively perform lossless coding of a specified image region of an input image, thereby to perform a conversion to a state making it difficult to verify an image in a portion corresponding to the specified image region, and/or
a protection canceling unit (5) that is adapted, when the protection function is determined by the set-state determining unit to have been cancelled, to perform decoding of an image region of an input image, which image region has undergone lossless coding to be a state making it difficult to be verified, to an original state in accordance with a decoding method corresponding to a lossless coding method.

2. An image protection apparatus according to claim 1, wherein
the protection process unit corresponds to plural types of lossless coding methods and is adapted to perform the lossless coding of the specified image region in accordance with any one of or a combination of the plural types of lossless coding methods.

3. An image protection apparatus according to claim 2, wherein
the protection process unit is adapted to add information of a selectively used lossless coding method to an image signal.

4. An image protection apparatus according to anyone of claim 1 to 3, further comprising:
a movement information acquiring unit adapted to acquire movement information in an imaging direction; and
a coding region moving unit is adapted to move the image region undergoing the lossless coding in accordance with the movement information acquired by the movement information acquiring unit so that the image region follows a subject set as a protection target.

5. An image protection apparatus according to anyone of claims 1 to 4, further comprising:
a movement detector unit adapted to detect a movement of a subject set as a protection target; and
a coding region moving unit adapted to move the image region undergoing the lossless coding in accordance with the movement detected by the movement detector unit so that the image region follows a subject set as a protection target.

6. An image protection apparatus according to anyone of claims 1 to 5, wherein
the protection canceling unit corresponds to plural types of lossless coding methods and is adapted to perform playback of an image in a portion corresponding to the image region, which has undergone the lossless coding, to an original state in accordance with information of a lossless coding method which information has been acquired from the input image.

7. An imaging apparatus, comprising:
an image output unit adapted to convert an imaged image acquirable by imaging a subject to output an image; and
an image protection apparatus according to anyone of claims 1 to 6.

8. An image protection method, comprising the steps of:
determining a set state regarding a protection function for an image; and
when the protection function is determined by the step of determining to be in a valid state, selectively performing lossless coding of a specified image region of an input image, thereby to perform a conversion to a state making it difficult to verify an image in a portion corresponding to the specified image region, and/or
when the protection function is determined by the step of determining to have been cancelled, performing decoding of an image region of an input image, which image region has undergone lossless coding to be a state making it difficult to be verified, to an original state in accordance with a decoding method corresponding to a lossless coding method.

9. An imaging method, comprising the steps of:
converting an imaged image acquirable by imaging a subject to output an image; and using an image protection method according to claim 8.

10. A computer program for causing a computer to execute processing, comprising the steps of:
determining a set state regarding a protection function for an image; and
when the protection function is determined by the step of determining to be in a valid state, selectively performing lossless coding of a specified image region of an input image, thereby to perform a conversion to a state making it difficult to verify an image in a portion corresponding to the specified image region, and/or
when the protection function is determined by the step of determining to have been cancelled, performing decoding of an image region of an input image, which image region has undergone lossless coding to be a state making it difficult to be verified, to an original state in accordance with a decoding method corresponding to a lossless coding method.

11. A computer program for causing a computer to execute processing, comprising the steps of:
converting an imaged image acquirable by imaging a subject to output an image; and processing the computer program according to claim 10.
